# DEMANDE DE BREVET EUROPEEN

(11) **EP 4 712 175 A1**
(43) Date de publication de la demande: **18.03.2026**
(21) Numéro de dépôt: 25201727.2
(22) Date de dépôt: 11.09.2025
(51) Int. Cl.: H01M 8/0258, H01M 8/2483, H01M 8/0247

(54) **EMPILEMENT DE CELLULES ELECTROCHIMIQUES REPARTIES EN GROUPES DISTINCTS ET COMPORTANT DES PLAQUES BIPOLAIRES A REDUCTION D ECOULEMENT DE COURT-CIRCUIT**

(30) Priorité: 13.09.2024 FR 2409786
(71) Demandeur: Commissariat à l'Energie Atomique et aux Energies Alternatives, 75015 Paris (FR)
(72) Inventeur: POIROT-CROUVEZIER, Jean-Philippe, 38054 Grenoble Cedex 09 (FR)
(74) Mandataire: Santarelli

(57) **Abrégé**

L'invention porte sur un empilement de cellules électrochimiques réparties en N groupes d'alimentation en les fluides réactifs. Chaque plaque bipolaire (1a) comporte N premiers collecteurs (4a, 4b) pour l'alimentation en le même premier fluide réactif, au moins une ligne d'étanchéité interne (5b), N premières lignes de joint (10a, 10b), et un compartiment d'homogénéisation (20). La ligne d'étanchéité interne (5b) est située entre le premier collecteur non-alimentant (4b) et la première ligne de joint (10b) associée. La première tôle (2) s'étend continûment entre les tunnels d'injection aval (14a, 14b) et le compartiment d'homogénéisation (20) en restant espacée de la deuxième tôle (3), de sorte que le premier fluide réactif s'écoule des tunnels d'injection aval (14a) dans le compartiment d'homogénéisation (20) en étant confiné entre les deux tôles (2, 3).

## Description

### DOMAINE TECHNIQUE

Le domaine de l'invention est celui des réacteurs électrochimiques tels que les piles à combustible et les électrolyseurs, comportant un empilement de cellules électrochimiques, et concerne plus particulièrement les plaques bipolaires du type à tôles conductrices.

### ÉTAT DE LA TECHNIQUE ANTÉRIEURE

Un réacteur électrochimique, tel qu'une pile à combustible ou un électrolyseur, comporte habituellement un empilement de cellules électrochimiques dont chacune comprend deux plaques bipolaires entre lesquelles sont situées une anode et une cathode disposées de part et d'autre d'un électrolyte. Les cellules sont le lieu d'une réaction électrochimique entre deux fluides réactifs introduits de manière continue.

D'une manière générale, dans le cas d'une pile à combustible, le fluide combustible (par exemple l'hydrogène) est apporté à l'anode, alors que le fluide comburant (par exemple de l'air) est amené à la cathode. La réaction électrochimique est subdivisée en deux demi-réactions, une réaction d'oxydation à l'interface anode/électrolyte, et une réaction de réduction à l'interface cathode/électrolyte. Pour avoir lieu, la réaction électrochimique requiert la présence d'un conducteur ionique entre les deux électrodes, à savoir l'électrolyte, et un conducteur électronique formé par le circuit électrique externe. L'empilement de cellules est ainsi le lieu de la réaction électrochimique : les fluides réactifs doivent y être apportés, les produits et les espèces non réactives doivent en être évacués, tout comme la chaleur produite lors de la réaction.

Les cellules électrochimiques sont habituellement séparées les unes des autres par des plaques bipolaires qui assurent à la fois l'interconnexion électrique entre les cellules et l'écoulement des fluides réactifs. Les plaques bipolaires comportent une face anodique au niveau de laquelle est formé un circuit de distribution du fluide combustible, et une face cathodique opposée où se trouve un circuit de distribution du fluide comburant. Chaque circuit de distribution prend la forme d'un réseau de canaux agencés pour amener le fluide réactif à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite.

L'empilement de cellules électrochimiques peut présenter une architecture permettant d'éviter une accumulation d'espèces non réactives dans les cellules. Pour cela, les cellules électrochimiques peuvent être réparties en plusieurs groupes distincts de cellules qui sont alimentés sélectivement en un même fluide réactif à partir de collecteurs d'alimentation dédiés. Le document EP3136492A1 décrit des exemples d'une telle architecture, dans le cas où les plaques bipolaires sont formées de tôles conductrices.

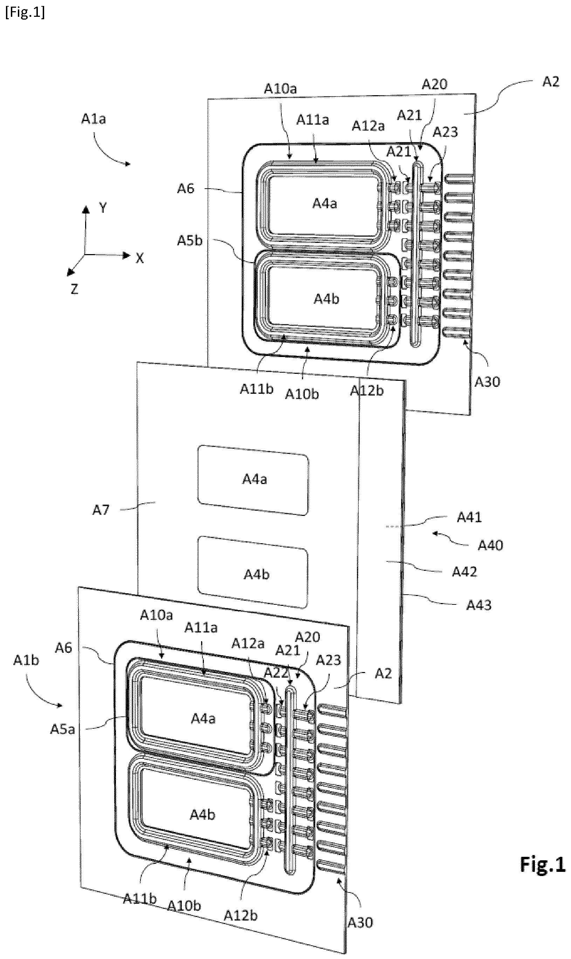

A ce titre, la figure 1 est une vue schématique et partielle, en perspective et en éclaté, d'une cellule électrochimique décrite dans le document EP3136492A1. Y sont représentés en particulier l'agencement de premiers collecteurs A4a, A4b d'alimentation en le premier fluide réactif, par exemple ici l'hydrogène, d'un compartiment d'homogénéisation A20, et de l'entrée du premier circuit de distribution A30.

La cellule électrochimique comporte deux plaques bipolaires A1a, A1b entre lesquelles un assemblage membrane électrodes A40 (AME) est situé. Les plaques bipolaires A1a, A1b sont formées chacune de deux tôles réalisées en un matériau électriquement conducteur et superposées l'une à l'autre. Seule la tôle A2 est visible sur la fig.1. L'AME A40 est formé d'une première électrode A41 (ici l'anode), d'une deuxième électrode A42 (cathode), et d'une membrane électrolytique A43. Une membrane isolante A7 s'étend également autour des deux premiers collecteurs A4a, A4b d'alimentation en hydrogène.

Les cellules électrochimiques sont réparties ici en 2 groupes distincts : « a » et « b ». Ainsi, les anodes des cellules du groupe « a » sont alimentées en hydrogène uniquement à partir d'un même premier collecteur A4a, alors que les anodes du groupe « b » sont alimentées en hydrogène uniquement à partir d'un même premier collecteur A4b. Les deux collecteurs A4a et A4b d'alimentation en hydrogène traversent les plaques bipolaires A1a, A1b. Ils sont adjacents l'un à l'autre et sont situés en regard, dans le plan XY de la plaque bipolaire, de l'entrée du premier circuit de distribution A30.

Les premiers collecteurs A4a et A4b d'alimentation en hydrogène sont chacun entouré continûment par une ligne de joint A10a, A10b, laquelle est formée d'une nervure longitudinale A11a, A11b sur laquelle s'étend un joint étanche. Des nervures transversales forment des premiers tunnels d'injection et des deuxièmes tunnels d'injection (ces derniers sont référencés A12a, A12b) qui communiquent avec la nervure longitudinale A11a, A11b, et sont situées entre le collecteur A4a, A4b correspondant et le circuit de distribution A30.

Une ligne d'étanchéité interne entoure le premier collecteur non-alimentant, c'est-à-dire le collecteur A4b dans le cas de la plaque bipolaire A1a (ligne d'étanchéité interne A5b), et le collecteur A4a dans le cas de la plaque bipolaire A1b (ligne d'étanchéité interne A5a). Cette ligne d'étanchéité est formée par une ligne de contact étanche entre les deux tôles, réalisée par exemple par soudure ou brasage. Elle permet d'éviter que l'hydrogène issu du collecteur alimentant et présent dans l'espace inter-tôle ne puisse rejoindre le collecteur non-alimentant (et vice versa).

Dans le cas d'une plaque bipolaire A1a d'une cellule du groupe « a » où l'anode A41 est alimentée en hydrogène par le collecteur A4a, les tunnels d'injection aval A12a de la ligne de joint A10a sont ouverts (extrémités ouvertes) : l'hydrogène peut s'écouler du collecteur A4a au travers de la ligne de joint A10a et ressortir au niveau de la face anodique de la plaque bipolaire A1a. En revanche, les tunnels d'injection aval A12b de la ligne de joint A10b sont fermés (extrémités fermées) : l'hydrogène peut s'écouler du collecteur A4b jusqu'à la ligne de joint A10b, mais ne peut ressortir au niveau de la face anodique.

Un compartiment d'homogénéisation A20 est situé entre les lignes de joint de collecteur A10a, A10b et le circuit de distribution A30. Il est formé ici d'une nervure longitudinale A21 et de nervures transversales formant également des tunnels d'injection amont A22 et aval A23. Ces derniers sont ouverts, de sorte que l'hydrogène sortant de la ligne de joint B rentre dans le compartiment d'homogénéisation et en ressort sur la première face à l'entrée du circuit de distribution.

Enfin, une ligne d'étanchéité supplémentaire A6 entoure les deux premiers collecteurs A4a, A4b et le compartiment d'homogénéisation A20, et s'étend notamment entre ce dernier et le circuit de distribution A30. Cette ligne d'étanchéité A6 est également formée par une ligne de contact étanche entre les deux tôles. Elle permet d'éviter que le fluide caloporteur qui est présent entre les deux tôles, au niveau de la zone active où se trouve les électrodes A41, A42, ne puisse s'écouler également entre les tôles dans le compartiment d'homogénéisation A20, dans la ligne de joint associée au collecteur alimentant, et jusqu'à ce dernier.

Ainsi, en fonctionnement et pour la plaque bipolaire A1a, l'hydrogène circule dans le collecteur non-alimentant A4b mais reste bloqué par la ligne de joint A10b fermée : il ne peut rejoindre le compartiment d'homogénéisation A20 ni ensuite le circuit de distribution A30. En revanche, l'hydrogène circule dans le collecteur A4a, traverse la ligne de joint A10a dont les tunnels d'injection aval A12a sont ouverts, ressort au niveau de la face anodique, puis s'introduit dans le compartiment d'homogénéisation A20. Il en ressort ensuite pour se retrouver au niveau de la face anodique, et rejoindre les canaux du circuit de distribution A30.

Cependant, il apparaît que l'hydrogène peut s'écouler de part et d'autre du compartiment d'homogénéisation A20 dans le plan XY et ainsi court-circuiter au moins partiellement ce dernier. Aussi, l'hydrogène ne sera pas correctement distribué à l'entrée du circuit de distribution A30, ce qui peut se traduire par une dégradation des performances de la cellule électrochimique.

Le document EP3136492A1 décrit également une variante où la nervure longitudinale A21 du compartiment d'homogénéisation A20 s'étend de manière à entourer continûment les deux premiers collecteurs A4a, A4b : l'hydrogène ne peut alors court-circuiter le compartiment d'homogénéisation A20 et rejoindre directement le circuit de distribution A30. Cependant, une telle configuration se traduit par une compacité moindre, en particulier autour des premiers collecteurs A4a, A4b, du fait de la présence de la nervure longitudinale A21.

### EXPOSÉ DE L'INVENTION

L'invention a pour objectif de remédier au moins en partie aux inconvénients de l'art antérieur, et plus particulièrement de proposer un empilement de cellules électrochimiques dont la configuration des plaques bipolaires permet d'éviter les écoulements de court-circuit du compartiment d'homogénéisation tout en préservant une compacité élevée.

Pour cela, l'objet de l'invention est un empilement de cellules électrochimiques, où chaque cellule électrochimique comporte une première et une deuxième plaques bipolaires pour alimenter respectivement une première et une deuxième électrodes en un premier et un deuxième fluides réactifs ; et où lesdites cellules électrochimiques sont réparties en N groupes distincts, avec N ≥ 2, les premières électrodes d'un même groupe étant alimentées en le premier fluide réactif à partir d'un même premier collecteur d'alimentation (2a).

Chaque plaque bipolaire est formée d'une première tôle orientée vers la première électrode et d'une deuxième tôle opposée, et comporte :
- les N premiers collecteurs d'alimentation en le premier fluide réactif, disposés en regard d'une entrée d'un premier circuit de distribution du premier fluide réactif à la première électrode, dont un premier collecteur, dit alimentant, pour fournir le premier fluide réactif, le ou les autres premiers collecteurs, dits non-alimentant, ne fournissant pas le premier fluide réactif ;
- au moins une ligne d'étanchéité interne, formée par une ligne de contact étanche entre les deux tôles, entourant continûment un premier collecteur non-alimentant ;
- N premières lignes de joint, entourant chacune un premier collecteur différent, et comportant chacune :
   ▪ une nervure longitudinale de la première tôle, et un joint longitudinal au contact de la nervure longitudinale, lesquels s'étendent continûment autour d'un premier collecteur ;
   ▪ des nervures transversales de la première tôle formant des tunnels d'injection amont et aval, situés de part et d'autre et communiquant avec la nervure longitudinale correspondante, et disposés entre le premier collecteur correspondant et un compartiment d'homogénéisation ;
      - dans le cas d'un premier collecteur alimentant, les tunnels d'injection amont sont ouverts, autorisant ainsi le premier fluide réactif à s'écouler du premier collecteur alimentant au compartiment d'homogénéisation ;
      - dans le cas d'un premier collecteur non-alimentant, les tunnels d'injection amont sont fermés, n'autorisant donc pas le premier fluide réactif à s'écouler du premier collecteur non-alimentant au compartiment d'homogénéisation ;
- le compartiment d'homogénéisation, formé par un espacement entre les deux tôles, présentant une entrée communiquant avec les tunnels d'injection aval des premières lignes de joint, et une sortie communiquant avec le premier circuit de distribution.

Selon l'invention, la ligne d'étanchéité interne est située entre le premier collecteur non-alimentant et la première ligne de joint associée. De plus, la première tôle s'étend continûment entre les tunnels d'injection aval et le compartiment d'homogénéisation en restant espacée de la deuxième tôle, de sorte que le premier fluide réactif s'écoule des tunnels d'injection aval dans le compartiment d'homogénéisation en étant confiné entre les deux tôles.

Dans le cadre de la présente invention, on entend par le terme « continûment » une extension spatiale continue, , c'est-à-dire sans discontinuité ni ouverture.

Ainsi, la première tôle s'étend de manière ininterrompue entre les tunnels d'injection aval et le compartiment d'homogénéisation, c'est-à-dire sans discontinuité ni ouverture

Certains aspects préférés mais non limitatifs de cet empilement de cellules électrochimiques sont les suivants.

Chaque plaque bipolaire peut comporter une ligne d'étanchéité interne, formée par une ligne de contact étanche entre les deux tôles, entourant continûment le premier collecteur alimentant.

Chaque cellule électrochimique peut comporter une membrane électriquement isolante, s'étendant entre les premières lignes de joint et les premiers collecteurs de chaque plaque bipolaire, laquelle comporte des supports disposés en bordure des premiers collecteurs et maintenant la membrane isolante à distance de la première tôle, évitant ainsi toute obstruction fluidique de l'ouverture des tunnels d'injection amont par la membrane isolante.

Le compartiment d'homogénéisation peut comporter des renfoncements locaux où les deux tôles viennent au contact l'une de l'autre, situés entre une entrée et une sortie du compartiment d'homogénéisation, évitant ainsi un affaissement des tôles l'une vers l'autre.

Le compartiment d'homogénéisation peut comporter des renfoncements de sortie définissant des tunnels de sortie, où les deux tôles viennent au contact l'une de l'autre, situés en sortie du compartiment d'homogénéisation.

Chaque plaque bipolaire peut comporter une ligne d'étanchéité interne périphérique, formée par une ligne de contact étanche entre les deux tôles, entourant continûment les premiers collecteurs, les lignes de joints de collecteur et le compartiment d'homogénéisation.

Le compartiment d'homogénéisation peut s'étendre à partir des tunnels d'injection aval des lignes de joint de collecteur jusqu'à la ligne d'étanchéité interne périphérique.

Une entrée du compartiment d'homogénéisation peut s'étendre de manière continue en regard des tunnels d'injection aval associé au premier collecteur alimentant et de manière continue en regard des tunnels d'injection aval associé au premier collecteur non-alimentant.

Une sortie du compartiment d'homogénéisation peut s'étendre de manière rectiligne en regard du circuit de distribution.

Une ligne d'étanchéité interne, formée par une ligne de contact étanche entre les deux tôles, peut entourer continûment le premier collecteur alimentant, et la première tôle ou la deuxième tôle ou chacune des première et deuxième tôle peut comporter au moins une ouverture communiquant avec les tunnels d'injection amont associés au collecteur alimentant de sorte à former une voie de communication permettant au fluide réactif du collecteur alimentant de pénétrer dans l'au moins une ouverture de la tôle et de s'écouler dans les tunnels d'injection amont, l'au moins une ouverture pouvant être disposée entre la ligne d'étanchéité interne et la première ligne de joint entourant le collecteur alimentant.

Les première et deuxième tôles peuvent s'étendre continûment et sans ouverture entre la ligne d'étanchéité interne située autour du premier collecteur non-alimentant et la première ligne de joint associée au collecteur non-alimentant.

Les plaques bipolaires peuvent être identiques les unes aux autres, et ne différer entre elles uniquement par l'ouverture des tunnels d'injection amont.

L'invention porte également sur un réacteur électrochimique, comportant un empilement de cellules électrochimiques selon l'une quelconque des caractéristiques précédentes, le réacteur étant une pile à combustible ou un électrolyseur.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique et partielle, en perspective et en éclaté, de cellules électrochimiques selon un exemple de l'art antérieur;
la figure 2 est une vue schématique et partielle, en vue de dessus, d'une plaque bipolaire d'une cellule électrochimique de l'empilement de cellules électrochimiques selon un mode de réalisation ;

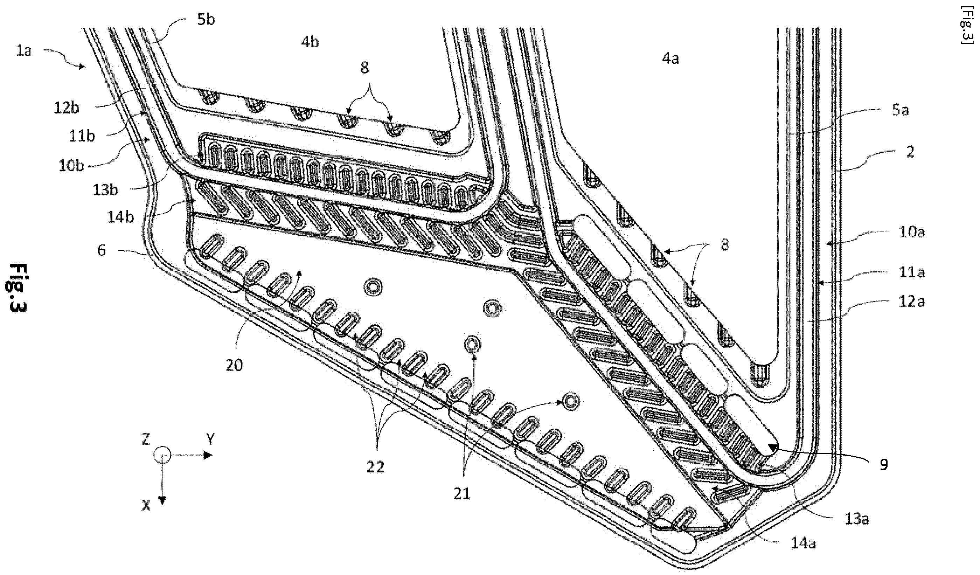

la figure 3 est une vue qui présente plus en détail une partie de la plaque bipolaire de la fig.2 ;

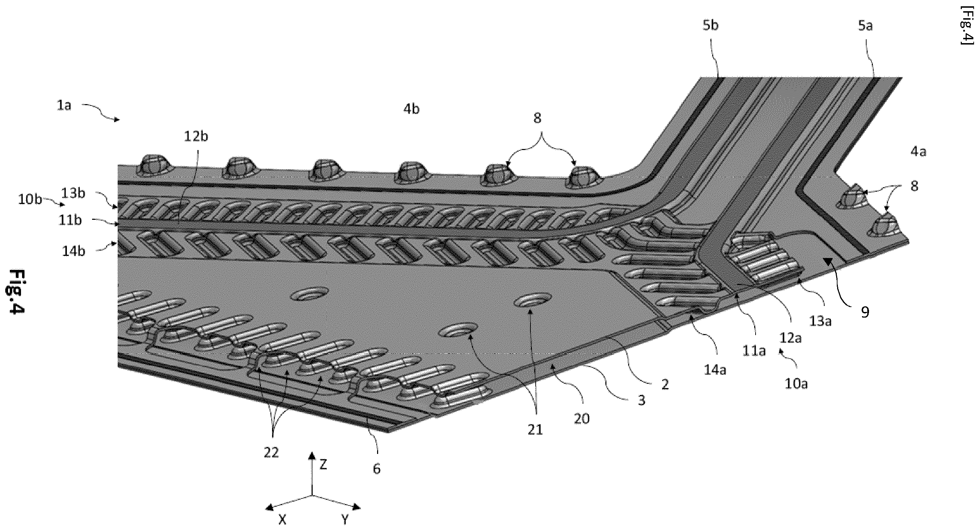

la figure 4 est une vue en perspective qui présente également plus en détail une partie de la plaque bipolaire de la fig.2.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un empilement de cellules électrochimiques pour des réacteurs électrochimiques tels que des piles à combustible et des électrolyseurs. Les cellules électrochimiques sont réparties en groupes distincts d'alimentation en les fluides réactifs. De plus, les plaques bipolaires sont formées chacune de deux tôles conductrices.

L'invention porte plus précisément sur des plaques bipolaires comportant : plusieurs premiers collecteurs pour l'alimentation en le même premier fluide réactif, lesquels sont entourés par des lignes de joint de collecteur; un compartiment d'homogénéisation ; et un circuit de distribution du premier fluide réactif. L'architecture des plaques bipolaires, et notamment la jonction fluidique entre les lignes de joint de collecteur et le compartiment d'homogénéisation, permet d'éviter les écoulements de court-circuit du compartiment d'homogénéisation, sans conduire à une dégradation de la compacité de la plaque bipolaire.

On décrira différents modes de réalisation et variantes en référence à une pile à combustible de type PEM (pour *Proton Exchange Membrane,* en anglais) dont l'anode est alimentée en hydrogène et la cathode en oxygène. L'invention s'applique cependant à tout type de pile à combustible, qu'elle fonctionne à basse température (inférieure à 200°C) ou à haute température comme les piles à oxyde solide (SOFC, pour *Solid Oxide Fuel Cell,* en anglais), ainsi qu'aux électrolyseurs électrochimiques.

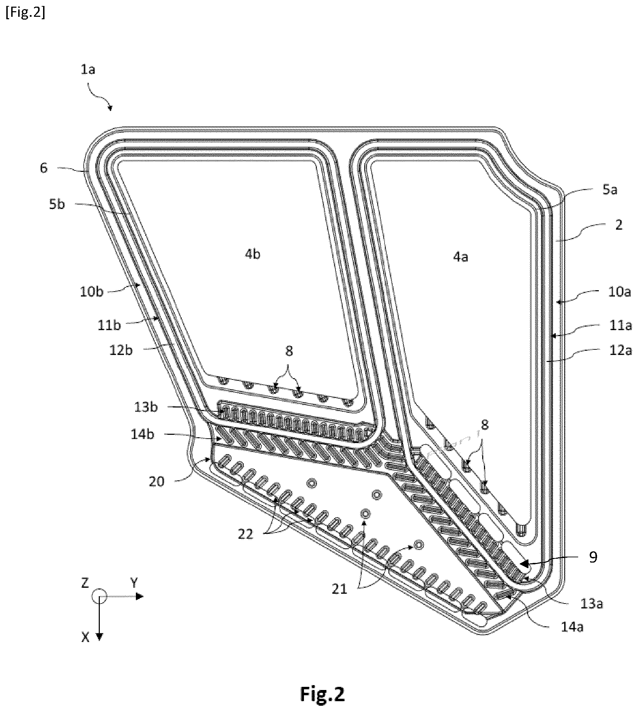

La figure 2 est une vue de dessus, schématique et partielle, d'une plaque bipolaire 1a d'une cellule appartenant à un empilement de cellules électrochimiques selon un mode de réalisation. Y sont représentés en détail deux premiers collecteurs 4a, 4b pour l'alimentation en un premier fluide réactif, des lignes d'étanchéité interne 5a, 5b, des lignes de joint de collecteur 10a, 10b, et un compartiment d'homogénéisation 20. Le circuit de distribution du premier fluide réactif n'est pas représenté. On considère ici que les cellules électrochimiques sont celles d'une pile à combustible de type PEM alimentée en hydrogène et en oxygène.

On définit ici et pour la suite de la description un repère direct tridimensionnel orthogonal XYZ, où les axes X et Y forment un plan parallèle au plan principal de la plaque bipolaire 1a, et où l'axe X s'étend des collecteurs 4a, 4b vers le circuit de distribution, l'axe Y suivant la largeur de la plaque bipolaire 1a et l'axe Z suivant son épaisseur. Par ailleurs, les termes « inférieur » et « supérieur » s'entendent comme étant relatifs à un positionnement croissant suivant la direction +Z.

Les cellules électrochimiques appartiennent à un empilement des cellules de la pile à combustible. Chaque cellule électrochimique comporte un assemblage membrane/électrodes AME (non représenté) formé d'une première électrode (anode) destinée à être alimentée en le premier fluide réactif (hydrogène) et d'une deuxième électrode (cathode) destinée à être alimentée en le deuxième fluide réactif (oxygène) séparées l'une de l'autre par une membrane électrolytique. Les AME sont disposés entre les plaques bipolaires, lesquelles sont adaptées à amener les fluides réactifs aux électrodes et à évacuer la chaleur produite ainsi que les espèces non réactives et les produits des réactions électrochimiques.

Par ailleurs, les cellules électrochimiques sont réparties en N groupes distincts, avec N≥2, où les premières électrodes des cellules d'un même groupe sont alimentées en le même premier fluide réactif à partir d'un même premier collecteur d'alimentation.

On note ici « a » et « b » les deux groupes de cellules électrochimiques (N=2). Dans les cellules du groupe « a », les premières électrodes, ici les anodes, sont alimentées en hydrogène uniquement par le même collecteur 4a que l'on appelle alors collecteur alimentant ; le collecteur 4b est alors dit non-alimentant. En revanche, dans les cellules du groupe « b », les anodes sont alimentées en hydrogène uniquement par le même collecteur 4b (collecteur alimentant) ; le collecteur 4a est alors non-alimentant.

Les plaques bipolaires sont formées chacune de deux tôles 2, 3 réalisées en un matériau électriquement conducteur, superposées l'une à l'autre. Ces tôles 2, 3 sont déformées localement pour former des nervures et des renfoncements, lesquels définissent alors les nervures des lignes de joint 10a, 10b, le compartiment d'homogénéisation 20 et les canaux du circuit de distribution.

La plaque bipolaire 1a comporte une face externe anodique qui est orientée vers l'anode (la face représentée sur la fig.2), et une face externe cathodique opposée et orientée vers la cathode. La face externe anodique correspond à la face externe de la tôle anodique 2 (tôle supérieure), et la face externe cathodique est la face externe de la tôle cathodique 3 (tôle inférieure). Le circuit de distribution anodique est formé au niveau de la face externe anodique. Entre les deux tôles 2, 3, et plus précisément dans la zone active où se situent les circuits de distribution anodique et cathodique, se situe un circuit de refroidissement dans lequel circule un fluide caloporteur.

Les tôles 2, 3 se présentent sous forme de feuilles ou de plaques de faible épaisseur. Le matériau électriquement conducteur peut être un métal ou un matériau composite par exemple chargé en graphite. L'épaisseur peut être de l'ordre de quelques dizaines à quelques centaines de microns, par exemple de 50 µm à 200 µm environ dans le cas de tôles métalliques.

Au moins la tôle 2 comporte des nervures et des renfoncements, obtenus par exemple par emboutissage, estampage ou tout autre technique de mise en forme, dont la forme sur une face est le complémentaire de la forme sur la face opposée. Les nervures permettent notamment de définir le circuit de distribution du fluide réactif au niveau de la face externe de la tôle, ainsi que le circuit de refroidissement du fluide caloporteur au niveau de la face interne.

Chaque plaque bipolaire comporte *a minima :*
- N premiers collecteurs 4a, 4b, pour l'alimentation des premières électrodes (anodes) en le même premier fluide réactif (hydrogène), dont un premier collecteur dit alimentant (ici le collecteur 4a), les autres premiers collecteurs étant dits non-alimentant (ici le collecteur 4b) ;
- au moins une première ligne d'étanchéité interne 5b, qui entoure le premier collecteur non-alimentant 4b ;
- N premières lignes de joint de collecteur 10a, 10b, qui entourent chacune un premier collecteur 4a, 4b différent ;
- un compartiment d'homogénéisation 20 du premier fluide réactif ;
- un circuit de distribution (non représenté) du premier fluide réactif (hydrogène) au niveau de la première électrode (anode).

Les premiers collecteurs 4a, 4b sont des ouvertures qui traversent chacune des plaques bipolaires. Les collecteurs des fluides réactifs sont situés de part et d'autre de la zone active (zone réactionnelle) suivant l'axe principal d'écoulement des fluides réactifs, ici suivant l'axe X. Le collecteur du fluide caloporteur (non représenté) peut être également situé de part et d'autre de la zone réactionnelle suivant l'axe X, ou en variante peut être situé de part et d'autre de cette zone suivant l'axe Y.

Comme indiqué plus haut, les plaques bipolaires comportent chacune N premiers collecteurs 4a, 4b pour l'alimentation en un même premier fluide réactif, avec N≥2. Dans cet exemple, il y a 2 premiers collecteurs 4a, 4b d'alimentation en hydrogène. Les collecteurs 4a, 4b sont adjacents l'un à l'autre et sont situés en regard, dans le plan XY, du même compartiment d'homogénéisation 20. Dans l'exemple de la fig.2, la plaque bipolaire 1a appartient à une cellule du groupe « a », de sorte que le collecteur 4a est dit 'alimentant' en hydrogène alors que le collecteur 4b est dit 'non-alimentant'.

Les plaques bipolaires comportent chacune au moins une première ligne d'étanchéité interne. Celle-ci correspond à une ligne de contact étanche entre les deux tôles au niveau de leur face interne. Le contact étanche peut être réalisé par soudure ou brasage, entre autres.

A minima, la plaque bipolaire 1a comporte une ligne d'étanchéité interne 5b qui entoure le premier collecteur non-alimentant 4b. Ainsi, on évite que l'hydrogène circulant dans un premier collecteur ne puisse rejoindre le ou les autres premiers collecteurs. Plus précisément, l'hydrogène qui circule à partir du collecteur alimentant 4a jusqu'au circuit de distribution en passant notamment entre les deux tôles 2, 3, ne peut rejoindre le collecteur non-alimentant 4b (et inversement).

De préférence, la plaque bipolaire 1a comporte N lignes d'étanchéité interne 5a, 5b, chacune entourant un premier collecteur 4a, 4b différent. Ici, une ligne d'étanchéité interne 5a entoure le collecteur alimentant 4a, et la ligne d'étanchéité interne 5b entoure le collecteur non-alimentant 4b.

Les lignes d'étanchéité interne 5a, 5b s'étendent ici de manière sensiblement rectiligne entre les supports 8 et les tunnels d'injection amont 13a, 13b. En variante, elles peuvent serpenter entre les supports 8 et les tunnels d'injection amont 13a, 13b, de manière à la surface intercalaire et gagner en compacité.

Une membrane souple (cf. fig.1), réalisée en un matériau électriquement isolant, peut être présente entre deux plaques bipolaires adjacentes pour empêcher tout contact électrique entre celles-ci. Elle peut donc s'étendre autour des premiers collecteurs 4a, 4b.

Pour éviter qu'elle ne vienne se plaquer contre la tôle supérieure 2, entre le premier collecteur alimentant 4a et les tunnels d'injection amont 13a, ce qui obstruerait alors l'écoulement d'hydrogène, des supports 8 sont prévus pour maintenir la membrane souple à distance de la tôle supérieure 2. Dans cet exemple, ces supports 8 sont présents en bordure des premiers collecteurs 4a, 4b. Il s'agit de plots tronqués. En variante, il peut s'agir d'une ou de plusieurs nervures (plots allongés).

Les plaques bipolaires comportent chacune N premières lignes de joint de collecteur, chacune entourant continûment un premier collecteur différent. Ici, le collecteur alimentant 4a est entouré par la ligne de joint 10a, et le collecteur non-alimentant 4b est entouré par la ligne de joint 10b.

Chaque ligne de joint 10a, 10b est formée d'une nervure longitudinale 11a, 11b de la tôle anodique 2 et d'un joint longitudinal 12a, 12b qui repose sur et au contact de la nervure longitudinale 11a, 11b. L'une et l'autre s'étendent continûment autour du collecteur correspondant. Chaque ligne de joint 10a, 10b comporte également des nervures transversales qui forment des tunnels d'injection amont 13a, 13b et aval 14a, 14b. Ces tunnels d'injection sont situés de part et d'autre de la nervure longitudinale 11a, 11b et communiquent avec elle. Ils sont disposés entre le collecteur 4a, 4b correspondant et le compartiment d'homogénéisation 20.

Les tunnels d'injection 13a, 13b, 14a, 14b sont formés ici par des nervures transversales où les deux tôles sont espacés l'une de l'autre, et sont délimités latéralement par des renfoncements où les tôles sont en contact l'une de l'autre. Ces tunnels d'injection assurent la transmission fluidique du premier fluide réactif de part et d'autre de la ligne de joint (lorsqu'ils sont associés à un premier collecteur alimentant), ainsi que le maintien mécanique de la nervure longitudinale pour éviter tout affaissement de celle-ci.

Dans cet exemple, les nervures transversales sont à comprendre au sens large : elles ont ici une forme allongée dans le plan XY, ce qui permet d'améliorer l'orientation du fluide, mais ce n'est pas indispensable. Ainsi, ces nervures pourraient ne pas être allongées, et peuvent alors présenter une forme de plots. Les fonctions de liaison fluidique et de maintien mécanique restent assurées.

Les tunnels d'injection amont 13a associés au collecteur alimentant 4a sont ouverts, c'est-à-dire que leur extrémité orientée vers le collecteur 4a est ouverte. L'hydrogène peut alors s'écouler du collecteur alimentant 4a et rentrer dans les tunnels d'injection amont 13a, puis dans la nervure longitudinale 11a et ensuite dans les tunnels d'injection aval 14a. En revanche, les tunnels d'injection amont 13b associés au collecteur non-alimentant 4b sont fermés, c'est-à-dire que leur extrémité orientée vers le collecteur 4b est fermée. L'hydrogène, qui s'écoule dans le collecteur non-alimentant 4b ne peut rentrer dans les tunnels d'injection amont 13b.

Une première tôle 2 comprend au moins une ouverture 9 communiquant avec les tunnels d'injection amont 13a associés au collecteur alimentant 4a, et qui est située au niveau de leur extrémité orientée vers le collecteur 4a. Les ouvertures 9 se situent ainsi en aval du collecteur alimentant 4a et en amont des tunnels d'injection amont 13a, incidemment en amont du joint longitudinal 12a associé. Elles jouent le rôle d'interface, autrement dit de voie de communication entre le collecteur alimentant 4a et les tunnels d'injection amont 13a associés. Le fluide réactif du collecteur alimentant 4a pénètre dans la ou les ouvertures 9 traversant l'épaisseur de la tôle et s'écoule dans les tunnels d'injection amont 13a. En d'autres termes, l'ouverture 9 permet au collecteur alimentant 4a de jouer son rôle d'alimentation de l'électrode associée.

L'au moins une ouverture 9 peut correspondre à une entrée d'un ou plusieurs tunnels d'injection amont 13a.

En variante, l'au moins une ouverture 9 peut être dans la deuxième tôle 3, ou dans les deux tôles 2, 3.

Au contraire, l'absence d'ouverture à l'extrémité des tunnels d'injections amont 13b associés au collecteur non-alimentant 4b ne permet pas la formation d'une interface entre lesdits tunnels d'injections amont 13b et le collecteur non alimentant 4b. Ainsi, le fluide réactif du collecteur non alimentant ne peut pas s'écouler dans les tunnels d'injection amont 13b associés.

L'ouverture locale 9 des tunnels d'injection amont 13a est réalisée typiquement par une découpe localisée de la tôle supérieure 2 (anodique), alors que la tôle inférieure 3 (cathodique) reste non découpée. En variante, les deux tôles 2, 3 peuvent être découpées, voire même seule la tôle inférieure 3 peut être découpée.

Les plaques bipolaires comportent chacune un compartiment d'homogénéisation 20, situé entre les tunnels d'injection aval 14a, 14b des lignes de joint de collecteur 10a, 10b d'une part, et l'entrée du circuit de distribution d'autre part. Le compartiment d'homogénéisation 20 se présente comme une zone dans le plan XY où les deux tôles 2, 3 sont espacées l'une de l'autre. Il s'étend ainsi à partir des tunnels d'injection aval 14a, 14b jusqu'au circuit de distribution, et présente des dimensions importantes qui permettent d'optimiser l'homogénéisation de l'écoulement d'hydrogène. Ces mêmes tunnels d'injection aval 14a, 14b raccordent donc fluidiquement la nervure longitudinale 11a, 11b et le compartiment d'homogénéisation 20.

Le compartiment d'homogénéisation 20 comporte une entrée (espacement entre les deux tôles 2, 3) continue en regard des tunnels d'injection aval 14a, 14b. Cette entrée s'étend de manière continue (et ici de manière rectiligne) en regard des tunnels d'injection aval 14a, et s'étend également de manière continue (et ici de manière rectiligne) en regard des tunnels d'injection aval 14b. Par ailleurs, le compartiment d'homogénéisation 20 comporte une sortie qui s'étend de manière rectiligne en regard du circuit de distribution.

Le compartiment d'homogénéisation 20 comporte ici des renfoncements locaux 21 où les deux tôles 2, 3 viennent en contact l'une de l'autre. Ils assurent un maintien mécanique des deux tôles, réduisant ainsi les risques d'un affaissement de l'une vers l'autre. Ces renfoncements locaux 21 sont distribués de manière sensiblement régulière dans le plan XY entre l'entrée et la sortie du compartiment 20. Ces renfoncements locaux 21 présentent ici des dimensions sensiblement circulaires dans le plan XY, mais peuvent présenter une forme oblongue, permettant notamment d'orienter l'écoulement de l'hydrogène vers la sortie.

Le compartiment d'homogénéisation 20 peut comporter des tunnels aval 22, situés à la sortie de ce dernier. Ils permettent d'améliorer l'orientation de l'écoulement de l'hydrogène vers le circuit de distribution, tout en évitant un affaissement des tôles l'une vers l'autre. Ils sont délimités latéralement par des renfoncements oblongs où les tôles 2, 3 viennent en contact l'une vers l'autre.

La sortie du compartiment d'homogénéisation 20 se situe en regard du circuit de distribution et de ses canaux. Cette sortie est formée par une ou plusieurs ouvertures de la tôle supérieure 2 au niveau des tunnels aval 22 du compartiment d'homogénéisation 20. Ces ouvertures peuvent être formées par une découpe localisée de la tôle supérieure 2. L'hydrogène sort alors du compartiment d'homogénéisation 20 et vient au contact de la face externe anodique de la plaque bipolaire 1a. Il peut alors s'écouler dans le circuit de distribution.

Les plaques bipolaires peuvent comporter chacune une ligne d'étanchéité interne 6, qui entoure continûment les deux collecteurs 4a, 4b (et les lignes de joint 10a, 10b) ainsi que le compartiment d'homogénéisation 20. Elle est formée par une ligne de contact étanche entre les deux tôles 2, 3, réalisée par exemple par soudure ou brasage. Elle passe notamment entre la sortie du compartiment d'homogénéisation 20 et l'entrée du circuit de distribution.

Selon l'invention, entre les tunnels d'injection aval 14a, 14b et le compartiment d'homogénéisation 20, la tôle supérieure 2 (anodique) s'étend continûment en étant espacée de la tôle inférieure 2, de sorte que l'hydrogène circulant dans les tunnels d'injection 14a rejoint le compartiment d'homogénéisation 20 tout en restant entre les deux tôles 2, 3, et donc sans sortir de l'espace entre les deux tôles 2, 3 pour venir sur la face externe anodique.

Autrement dit, la tôle supérieure 2 reste espacée de la tôle inférieure 3 de manière continue entre les nervures longitudinales 11a, 11b et le compartiment d'homogénéisation 20, par le biais des tunnels d'injection aval 14a, 14b. Les nervures longitudinales 11a, 11b sont donc raccordés fluidiquement au compartiment d'homogénéisation 20 par les tunnels d'injection aval 14a, 14b. Il n'y a donc pas d'espace, entre les nervures longitudinales 11a, 11b et le compartiment d'homogénéisation 20, où la tôle supérieure 2 serait ouverte ce qui permettrait à l'hydrogène de sortir de l'espace entre les deux tôles 2, 3 et de venir au contact de la face externe anodique. L'hydrogène passe donc des tunnels d'injection aval 14a au compartiment d'homogénéisation 20 en restant confiné. Dans le cas d'une plaque bipolaire 1b (i.e. où le premier collecteur alimentant est le collecteur 4b), l'hydrogène passerait donc des tunnels d'injection aval 14b au compartiment d'homogénéisation 20 en restant également confiné.

Cet agencement est rendu possible dans la mesure où les lignes d'étanchéité interne 5a, 5b sont situées entre les collecteurs 4a, 4b et les lignes de joint de collecteur 10a, 10b. Ainsi, comme l'hydrogène passe directement de la nervure longitudinale 11a au compartiment d'homogénéisation 20 (via les tunnels d'injection aval 14a) sans sortir hors de l'espace entre les deux tôles 2, 3, il ne peut court-circuiter le compartiment d'homogénéisation 20 comme dans l'exemple de l'art antérieur illustré sur la fig.1.

Il n'est donc pas nécessaire que le compartiment d'homogénéisation 20 entoure continûment les premiers collecteurs 4a, 4b en étant associé à un joint longitudinal, comme dans la variante du document EP3136492A1 mentionnée précédemment, ce qui permet de préserver la compacité de la plaque bipolaire.

Le compartiment d'homogénéisation 20 peut donc s'étendre librement dans le plan XY et présenter ainsi un élargissement dans le plan XY en comparaison à celui de la fig.1, ce qui assure une meilleure homogénéisation de l'hydrogène à l'entrée du circuit de distribution.

Notons que les plaques bipolaires peuvent présenter une configuration identique, en particulier lorsque chaque collecteur 4a, 4b est entouré par une ligne d'étanchéité interne 5a, 5b comme dans le cas de la fig.2, et ne diffèrent entre elles que par la localisation d'ouvertures 9 des tunnels d'injection amont 13a.

Des modes de réalisation particuliers viennent d'être décrits. Différentes variantes et modifications apparaîtront à l'homme du métier.

A ce titre, le plan de contact entre les deux tôles 2, 3, où sont notamment réalisées les lignes d'étanchéité interne 5a, 5b, est ici déporté au niveau du plan de la nervure longitudinale de la ligne de joint inférieure (tôle inférieure cathodique). Ainsi, la plupart des nervures sont réalisées ici par déformation de la tôle supérieure 2 uniquement. Cependant, le plan de contact pourrait tout aussi bien être un plan médian conduisant à la réalisation de nervures dans chacune des deux tôles.

## Revendications

1. Empilement de cellules électrochimiques,
∘ chaque cellule électrochimique comportant une première et une deuxième plaques bipolaires pour alimenter respectivement une première et une deuxième électrodes en un premier et un deuxième fluides réactifs ;
∘ lesdites cellules électrochimiques étant réparties en N groupes distincts, avec N ≥ 2, les premières électrodes d'un même groupe étant alimentées en le premier fluide réactif à partir d'un même premier collecteur d'alimentation (2a) ;
∘ chaque plaque bipolaire (1a), formée d'une première tôle (2) orientée vers la première électrode et d'une deuxième tôle (3) opposée, comportant :
• les N premiers collecteurs (4a, 4b) d'alimentation en le premier fluide réactif, disposés en regard d'une entrée d'un premier circuit de distribution du premier fluide réactif à la première électrode, dont un premier collecteur (4a), dit alimentant, pour fournir le premier fluide réactif, le ou les autres premiers collecteurs (4b), dits non-alimentant, ne fournissant pas le premier fluide réactif ;
• au moins une ligne d'étanchéité interne (5b), formée par une ligne de contact étanche entre les deux tôles (2, 3), entourant continûment un premier collecteur non-alimentant (4b) ;
• N premières lignes de joint (10a, 10b), entourant chacune un premier collecteur (4a, 4b) différent, et comportant chacune :
▪ une nervure longitudinale (11a, 11b) de la première tôle (2), et un joint longitudinal (12a, 12b) au contact de la nervure longitudinale, lesquels s'étendent continûment autour d'un premier collecteur (4a, 4b) ;
▪ des nervures transversales de la première tôle (2) formant des tunnels d'injection amont (13a, 13b) et aval (14a, 14b), situés de part et d'autre et communiquant avec la nervure longitudinale (11a, 11b) correspondante, et disposés entre le premier collecteur (4a, 4b) correspondant et un compartiment d'homogénéisation (20) ;
- dans le cas d'un premier collecteur alimentant (4a), les tunnels d'injection amont (13a) sont ouverts, autorisant ainsi le premier fluide réactif à s'écouler du premier collecteur alimentant (4a) au compartiment d'homogénéisation (20) ;
- dans le cas d'un premier collecteur non-alimentant (4b), les tunnels d'injection amont (13b) sont fermés, n'autorisant donc pas le premier fluide réactif à s'écouler du premier collecteur non-alimentant (4b) au compartiment d'homogénéisation (20) ;
• le compartiment d'homogénéisation (20), formé par un espacement entre les deux tôles (2, 3), présentant une entrée communiquant avec les tunnels d'injection aval (14a, 14b) des premières lignes de joint (10a, 10b), et une sortie communiquant avec le premier circuit de distribution ;
∘ **caractérisé en ce que** :
• la ligne d'étanchéité interne (5b) est située entre le premier collecteur non-alimentant (4b) et la première ligne de joint (10b) associée ;
• la première tôle (2) s'étend continûment entre les tunnels d'injection aval (14a, 14b) et le compartiment d'homogénéisation (20) en restant espacée de la deuxième tôle (3), de sorte que le premier fluide réactif s'écoule des tunnels d'injection aval (14a) dans le compartiment d'homogénéisation (20) en étant confiné entre les deux tôles (2, 3).

2. Empilement de cellules électrochimiques selon la revendication 1, dans lequel chaque plaque bipolaire (1a) comporte une ligne d'étanchéité interne (5a), formée par une ligne de contact étanche entre les deux tôles (2, 3), entourant continûment le premier collecteur alimentant (4a).

3. Empilement de cellules électrochimiques selon la revendication 1 ou 2, dans lequel chaque cellule électrochimique comporte une membrane électriquement isolante, s'étendant entre les premières lignes de joint (10a, 10b) et les premiers collecteurs (4a, 4b) de chaque plaque bipolaire (1a), laquelle comporte des supports (8) disposés en bordure des premiers collecteurs (4a, 4b) et maintenant la membrane isolante à distance de la première tôle (2), évitant ainsi toute obstruction fluidique des tunnels d'injection amont (13a) par la membrane isolante.

4. Empilement de cellules électrochimiques selon l'une quelconque des revendications 1 à 3, dans lequel le compartiment d'homogénéisation (20) comporte des renfoncements locaux (21) où les deux tôles (2, 3) viennent au contact l'une de l'autre, situés entre une entrée et une sortie du compartiment d'homogénéisation, évitant ainsi un affaissement des tôles l'une vers l'autre.

5. Empilement de cellules électrochimiques selon l'une quelconque des revendications 1 à 4, dans lequel le compartiment d'homogénéisation (20) comporte des renfoncements de sortie (22) définissant des tunnels de sortie, où les deux tôles (2, 3) viennent au contact l'une de l'autre, situés en sortie du compartiment d'homogénéisation.

6. Empilement de cellules électrochimiques selon l'une quelconque des revendications 1 à 5, dans lequel chaque plaque bipolaire comporte une ligne d'étanchéité interne périphérique (6), formée par une ligne de contact étanche entre les deux tôles (2, 3), entourant continûment les premiers collecteurs (4a, 4b), les lignes de joints de collecteur (10a, 10b) et le compartiment d'homogénéisation (20).

7. Empilement de cellules électrochimiques selon la revendication 6, dans lequel le compartiment d'homogénéisation (20) s'étend à partir des tunnels d'injection aval (14a, 14b) des lignes de joint de collecteur (10a, 10b) jusqu'à la ligne d'étanchéité interne périphérique (6).

8. Empilement de cellules électrochimiques selon l'une quelconque des revendications précédentes, dans lequel une entrée du compartiment d'homogénéisation (20) s'étend de manière continue en regard des tunnels d'injection aval (14a) associé au premier collecteur alimentant (4a) et de manière continue en regard des tunnels d'injection aval (14b) associé au premier collecteur non-alimentant (4b).

9. Empilement de cellules électrochimiques selon l'une quelconque des revendications précédentes, dans lequel une sortie du compartiment d'homogénéisation (20) s'étend de manière rectiligne en regard du circuit de distribution.

10. Empilement de cellules électrochimiques selon l'une quelconque des revendications précédentes, dans lequel une ligne d'étanchéité interne (5a), formée par une ligne de contact étanche entre les deux tôles (2, 3), entoure continûment le premier collecteur alimentant (4a) et dans lequel la première tôle (2) ou la deuxième tôle ou chacune des première et deuxième tôle comporte au moins une ouverture (9) communiquant avec les tunnels d'injection amont (13a) associés au collecteur alimentant (4a) de sorte à former une voie de communication permettant au fluide réactif du collecteur alimentant (4a) de pénétrer dans l'au moins une ouverture (9) de la tôle et de s'écouler dans les tunnels d'injection amont (13a), l'au moins une ouverture étant disposée entre la ligne d'étanchéité interne (5a) et la première ligne de joint (10a) entourant le collecteur alimentant (4a).

11. Empilement de cellules électrochimiques selon la revendication (10), dans lequel les première et deuxième tôles (2,3) s'étendent continûment et sans ouverture entre la ligne d'étanchéité interne (5b) située autour du premier collecteur non-alimentant (4b) et la première ligne de joint (10b) associée au collecteur non-alimentant (4b).

12. Empilement de cellules électrochimiques selon l'une quelconque des revendications précédentes, dans lequel les plaques bipolaires sont identiques les unes aux autres, et ne diffèrent entre elles uniquement par l'ouverture des tunnels d'injection amont (13a, 13b). 13. Réacteur électrochimique, comportant un empilement de cellules électrochimiques selon l'une quelconque des revendications précédentes, le réacteur étant une pile à combustible ou un électrolyseur.
